# EUROPÄISCHE PATENTSCHRIFT

(11) **EP 0 486 434 B1**
(45) Veröffentlichungstag und Bekanntmachung des Hinweises auf die Patenterteilung: **26.04.1995**
(21) Anmeldenummer: 91810892.9
(22) Anmeldetag: 15.11.1991
(51) Int. Cl.: A47J 31/40

(54) **Brühzylinder und Brühkolben für eine Brühvorrichtung insbesondere einer Kaffeemaschine**
Brewing piston and cylinder for an infuser unit, especially a coffee machine
Piston et cylindre d'échaudage pour une unité d'infusion, en particulier pour une cafetière

(30) Priorität: 16.11.1990 CH 3653/90
(43) Veröffentlichungstag der Anmeldung: 20.05.1992
(73) Patentinhaber: JURA ELEKTROAPPARATE AG, CH-4626 Niederbuchsiten (CH)
(72) Erfinder: Torma, Mikael, CH-4612 Wangen b. Olten (CH)
(74) Vertreter: Tschudi, Lorenz

(56) Entgegenhaltungen:
- DE-A- 2 012 503
- DE-A- 2 143 206
- DE-C- 3 843 568
- US-A- 3 055 286

## Beschreibung

Die vorliegende Erfindung bezieht sich auf einen Brühkolben für eine Brühvorrichtung einer Kaffeemaschine mit einem Kolbenboden und einem Abflussorgan für den gebrühten Kaffee.

Aus der DE-A-2 012 503 sowie aus der US-A-3 055 286 sind Kaffeemaschinen vorbekannt, die den Nachteil aufweisen, dass nicht die gesamte gebrühte Kaffeemenge vom Brühkolben in die Tasse gelangt.

Es ist eine Aufgabe der vorliegenden Erfindung, einen festen Brühkolben für eine Brühvorrichtung insbesondere einer Kaffeemaschine derart auszubilden, dass das gesamte gebrühte Kaffeevolumen abfliessen kann. Dies wird erfindungsgemäss durch die kennzeichnenden Merkmale des Patentanspruches 1 erzielt.

Im folgenden werden anhand der beiliegenden Zeichnung Ausführungsbeispiele der Erfindung sowie deren Verwendung näher beschrieben. Es zeigen:
- **Fig. 1**: einen Schnitt durch den Brühteil einer Brühvorrichtung einer Kaffeemaschine,
- **Fig. 2**: einen Schnitt durch den Brühzylinder und den Brühkolben der Brühvorrichtung,
- **Fig. 3**: eine Vorderansicht der Platte mit dem Kaffeeausguss.

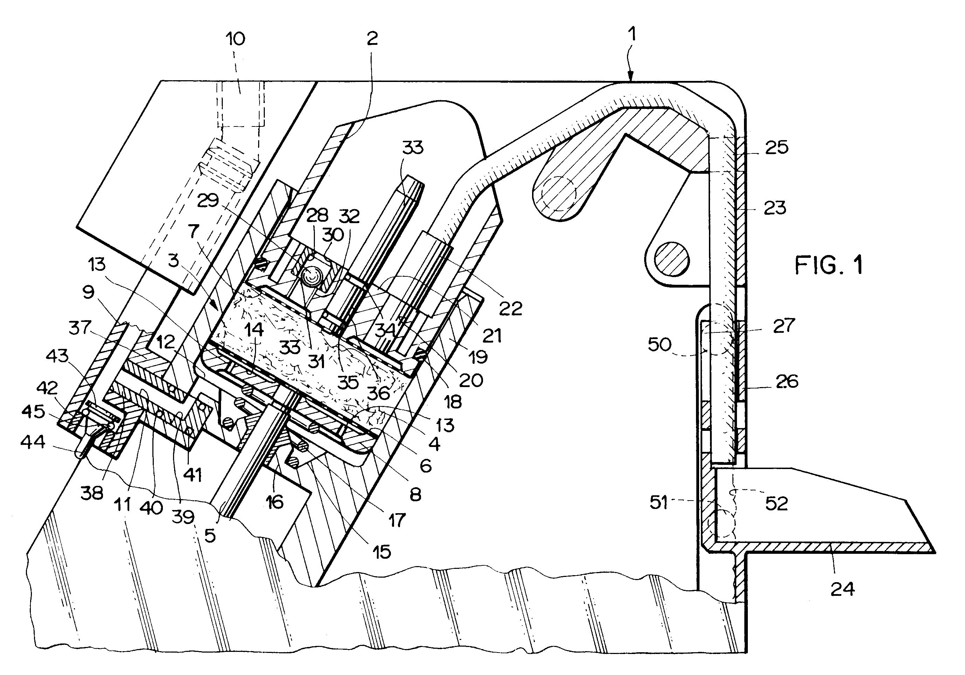

In Fig. 1 ist ein Schnitt durch den oberen Teil einer Brühvorrichtung für eine Kaffeemaschine dargestellt. Die Brühvorrichtung 1 bildet eine aus der Kaffeemaschine herausnehmbare Einheit und umfasst einen festen Brühkolben 2 sowie einen Brühzylinder 3. In der Fig. 1 ist eine Stellung des Brühzylinders 3 bezüglich des festen Brühkolbens 2 während dem Brühvorgang dargestellt. Das zu brühende Kaffeepulver 4 befindet sich dabei zwischen einer mit einer beweglichen Kolbenstange 5 verbundenen Siebplatte 6 unten im Zylinder 3 und einer unten am Brühkolben 2 angeordneten festen Siebplatte 7. Der Brühzylinder 3 ist relativ zum festen Brühkolben 2 durch einen nicht dargestellten Antrieb und Führungen bewegbar. Die Kolbenstange 5 mit der an ihrem oberen Ende befestigten Verteil- und Halteplatte 8 und der darüber befindlichen Siebplatte 6 sind relativ zum Brühzylinder 3 bewegbar, wobei die Kolbenstange 5, die Verteilplatte 8 und die Siebplatte 6 einen beweglichen Kolben zum Ausstoss des Kaffeesatzes nach dem Brühvorgang bilden. Seitlich am Brühzylinder 3 ist ein Wasseranschluss 9 angebracht, der während des Brühvorganges mit einer Brühwasserzuführleitung 10 verbunden ist. Das Brühwasser gelangt über einen Kanal 11 in einen Raum 12 unterhalb der Verteilplatte 8 und durch Schlitze 13 in Vertiefungen 14 unterhalb der Siebplatte 6. Dort wird das Brühwasser infolge der geeigneten Anordnung der Schlitze 13 regelmässig unter dem Kaffeepulver 4 verteilt und durchströmt das Kaffeepulver 4 homogen. Eine in einer Ringnut 15 im Boden 16 des Brühzylinders angeordnete Spiralfeder 17 drückt die Verteilplatte 8 mit der Siebplatte 6 gegen den Kaffeekuchen 4, welcher seinerseits gegen die Siebplatte 7 unten im festen Brühkolben 2 gedrückt wird. In einer Aufquill- resp. Aufschwemmphase, wenn das Brühwasser beginnt, den Kaffeekuchen 4 zu durchströmen, kann der Kaffeekuchen 4 durch den Druck der Feder 17, welche sich in diesem Falle etwas ausdehnt, noch zusammengepresst werden. Der Brühkolben 2 ist mit einem O-Ring 18 gegenüber der Seitenwandung 19 des Brühzylinders 3 abgedichtet. Der gebrühte Kaffee strömt durch eine Bohrung 20 im Boden 21 des Brühkolbens 2 in ein Rohr 22 und durch einen Schlauch 23 zu einem Kaffeeausguss 24. Der Schlauch 23 ist in einer Durchtrittsöffnung 25 oberhalb einem nicht dargestellten Antrieb für den Brühzylinder geführt. Eine Platte 26, welche den Kaffeeausguss 24 trägt, ist in einer Führung 27 an der Vorderseite der Brühvorrichtung 1 geführt und kann in der Höhe verstellt werden, um eine Anpassung an die zu füllenden Kaffeetassen oder Kaffeekännchen vorzunehmen. Die Platte 26 ist oben und unten mit Führungszapfen 50 und in der Mitte mit Rasterzapfen 51 versehen. Die Rasterzapfen 51 drücken gegen eine seitlich an der Führung 49 angeordnete Rasterung 52.

Im Boden 21 des Brühkolbens 2 ist eine Ausnehmung 28 zur Aufnahme eines kugelförmigen Ventilkörpers 29 vorgesehen. Beim Brühvorgang und anschliessenden Ausfliessen des gebrühten Kaffees durch den Schlauch 23 ist das Ventil 28, 29 geschlossen, wobei der kugelförmige Ventilkörper 29 gegen einen oberen Rand 30 der Ausnehmung 28 dichtet. Nachdem der gebrühte Kaffee zum grössten Teil abgeflossen ist, befindet sich noch ein Rest im Schlauch 23, wobei in dieser Phase der Ventilkörper 29 nach unten auf einen Rand 31 der Ausnehmung 28 fällt und dadurch Luft durch einen Kanal 32 in den Brühraum zwischen den beiden Siebplatten 6, 7, in die Bohrung 20, das Rohr 22 und den Schlauch 23 gelangen kann und somit der restliche Kaffee im Schlauch 23 über den Kaffeeausguss 24 in die Tasse abfliessen kann und somit kein Kaffee verloren geht. Im weiteren wird ein trockenerer Kaffeekuchen erhalten, was die Schimmelbildung reduziert. Das Ventil mit der Ausnehmung 28, dem kugelförmigen Ventilkörper 29 und dem Ventilsitz 30 wirkt als Rückschlagventil. Das Ende des Schlauches 23 liegt unterhalb des unteren Endes der Bohrung 20 im Boden 21 des Brühkolbens 2. Dadurch erfolgt nach dem Druckwegfall im Brühzylinder eine Selbstentleerung des Schlauches 23.

Zwecks Reinigung ist die Siebplatte 7 unten im Boden des Brühkolbens 2 mit einem Stift 33 versehen, der mit zwei O-Ringen 34 und 35 in einer Bohrung 36 des Bodens 21 des festen Brühkolbens 2 gedichtet ist.

In einem seitlichen Ansatz 37 des Wasseranschlusses 9 ist ein Verbindungsstück 38 gehalten, welches in eine Bohrung 39 im Brühzylinder 3 eingeführt ist. Das Ansatzstück 37 ist mit zwei O-Ringen 40 und 41 in der Bohrung 11 gedichtet. Der Kanal 11 im Verbindungsstück 38 verbindet den Wasseranschluss 9 mit dem Raum 12 im Brühzylinder unterhalb der Verteilplatte 8. Im unteren Bereich des Wasseranschlusses 9 ist auf einer Halterung 42 ein Ventilkörper mit einem oberen verbreiterten Teil 43 und einem unteren Betätigungsteil 44 gehalten und mit einem O-Ring 45 gedichtet. Wenn der Ventilkörper 43, 44 nach oben in die Halterung 42 gedrückt wird, so kann Restwasser aus der Wasserzuführung 9 abgelassen werden. Der stiftförmige Unterteil 44 des Ventilkörpers, der aus dem Wasseranschluss 9 nach unten herausragt, wird durch einen Anschlag betätigt, wenn sich der Brühzylinder in einer hier nicht dargestellten Einfüllstellung für das Kaffeepulver befindet.

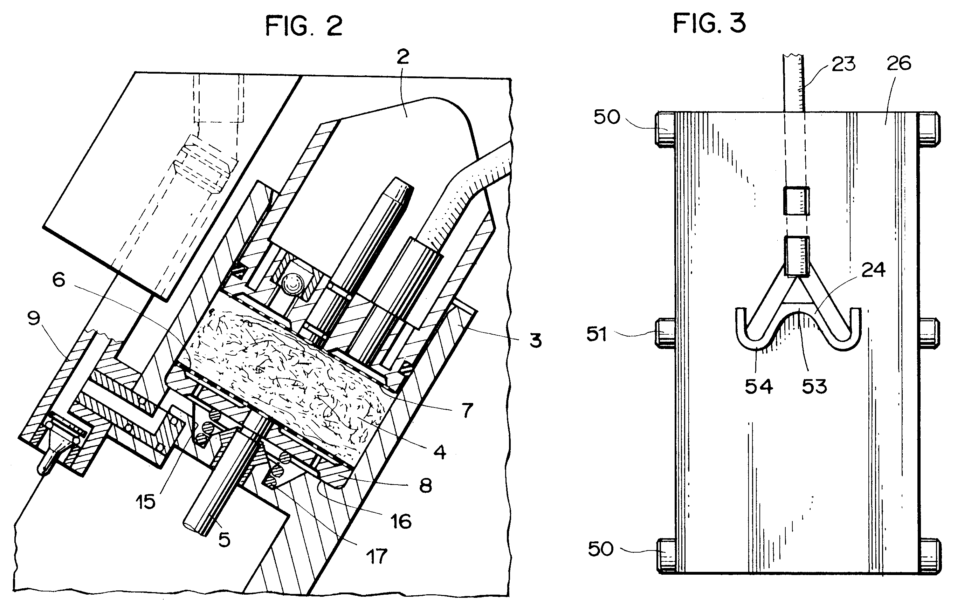

In der Fig. 2 ist ein Schnitt durch den Brühzylinder in der Phase dargestellt, wenn dieser mit eingefülltem Kaffee gegen den Brühkolben 2 gedrückt wird, wobei noch kein Wasser in den Brühzylinder strömt. Das Kaffeepulver 4 ist in dieser Phase des Brühvorganges noch nicht optimal zwischen den Siebplatten 6 und 7 verteilt und zusammengepresst. Die Feder 17 ist noch zusammengedrückt, und die Verteilplatte 8 befindet sich auf dem Boden 16 des Brühzylinders 3.

Fig. 3 zeigt eine Vorderansicht der Platte 26 mit dem Kaffeeausguss 24, den Führungszapfen 50 und den Rasterzapfen 51. Der Kaffeeausguss 24 weist unter dem Schlauch 23 eine Erhöhung 53 und seitlich von dieser Erhöhung zwei Vertiefungen 54 auf, so dass der vom Ausguss 24 nach unten fliessende Kaffee entweder in eine oder zwei Tassen gefüllt werden kann.

## Patentansprüche

1. Brühkolben für eine Brühvorrichtung (1) insbesondere einer Kaffeemaschine, mit einem Kolbenboden (21) und einem Abflussorgan (20, 22, 23) für den gebrühten Kaffee, dadurch gekennzeichnet, dass ein im Kolbenboden (21) angeordnetes Ventil (28, 29, 30) zur Belüftung des Brühbereichs vorhanden ist.

2. Brühkolben nach Patentanspruch 1, dadurch gekennzeichnet, dass das Abflussorgan (20, 22, 23) ein im Kolbenboden (21) angeordnetes Rohr (22) und einen mit diesem Rohr verbundenen Schlauch (23) umfasst, wobei das Ende des Schlauches (23) tiefer liegt als das untere Ende des Rohres (22).

## Claims

1. A brewing piston for a brewing device (1), especially for a coffee machine, with a piston head (21) and a discharge element (20, 22, 23) for the brewed coffee, characterized in that a valve (28, 29, 30) disposed in the piston head (21) is provided for ventilation of the brewing area.

2. The brewing piston according to claim 1, characterized in that the discharge element (20, 22, 23) comprises a pipe (22) disposed in the piston head (21) and a flexible tube (23) connected to this pipe, the end of the flexible tube (23) being lower than the lower end of the pipe (22).

## Revendications

1. Piston infuseur pour un dispositif d'infusion (1), en particulier pour une machine à café, avec un socle de piston (21) et un organe d'évacuation (20, 22, 23) pour le café infusé, caractérisé en ce qu'une soupape (28, 29, 30) est placée dans le socle du piston (21) pour la ventilation de l'espace d'infusion.

2. Piston infuseur selon la revendication 1, caractérisé en ce que l'organe d'évacuation (20, 22, 23) comprend un tube (22) placé dans le socle du piston (21) et un tuyau (23) relié à ce tube, et en ce que l'extrémité du tuyau (23) se trouve plus bas que l'extrémité inférieure du tube (22).
